# EUROPÄISCHE PATENTSCHRIFT

(11) **EP 1 342 400 B1**
(45) Veröffentlichungstag und Bekanntmachung des Hinweises auf die Patenterteilung: **26.05.2004**
(21) Anmeldenummer: 03003965.5
(22) Anmeldetag: 22.02.2003
(51) Int. Cl.: A01C 15/04, A01C 7/08

(54) **Verteiler für eine Verteilmaschine**
Distribution head for a spreader
Tête de distribution pour un épandeur

(30) Priorität: 07.03.2002 DE 10210010
(43) Veröffentlichungstag der Anmeldung: 10.09.2003
(73) Patentinhaber: Kverneland ASA, 4355 Kvernaland (NO)
(72) Erfinder: Stüttgen, Gerhard, 59510 Lippetal-Nordwald (DE); Schumacher, Ferdinand, 59510 Lippetal-Oestinghausen (DE); Meinel, Till, Dr., 59494 Soest (DE)
(74) Vertreter: Becker, Thomas, Dr., Dipl.-Ing.

(56) Entgegenhaltungen:
- EP-A- 0 328 858
- DE-C- 4 411 240
- FR-A- 2 036 252
- US-A- 4 480 794
- US-A- 4 989 784

## Beschreibung

Die Erfindung betrifft einen Verteiler für eine Verteilmaschine für Saatgut, Dünger oder dergleichen, wie sie sich der Gattung nach aus folgenden Veröffentlichungen ergibt: DE 44 11 240 C1, EP 309 608 A2, US 4,989,784 oder EP 0 328 858 B1.

Der prinzipielle Aufbau eines solchen Verteilers ist wie folgt: eine Zuführleitung für das Saatgut (beziehungsweise den Dünger oder andere stückige oder pulverförmige Materialien), die in der Funktionsposition oft vertikal verläuft, mündet in den Boden eines im Wesentlichen zylinderförmigen Verteilerkopfes relativ geringer Bauhöhe. Der Durchmesser des Verteilerkopfes ist wesentlich größer als der Durchmesser der Zuführleitung.

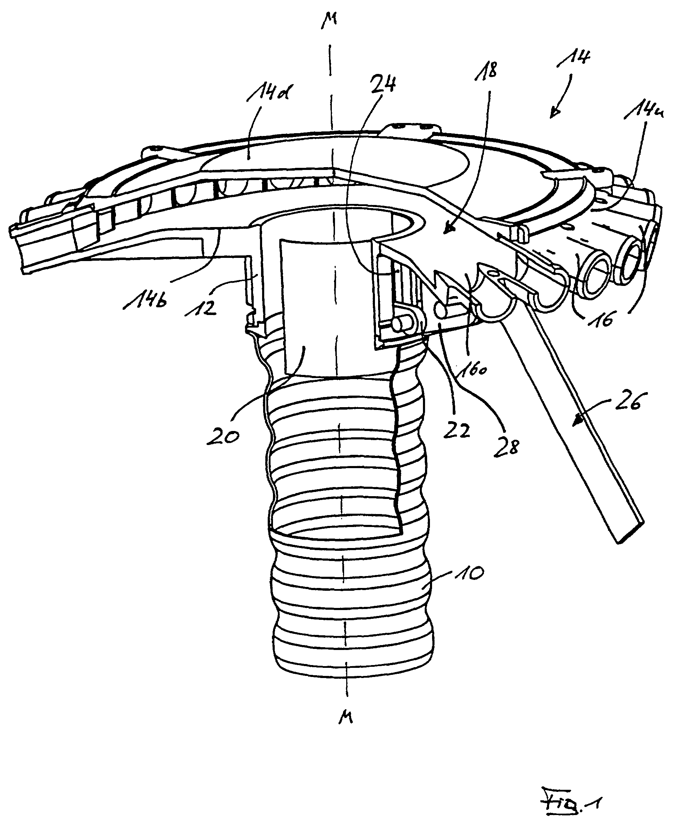

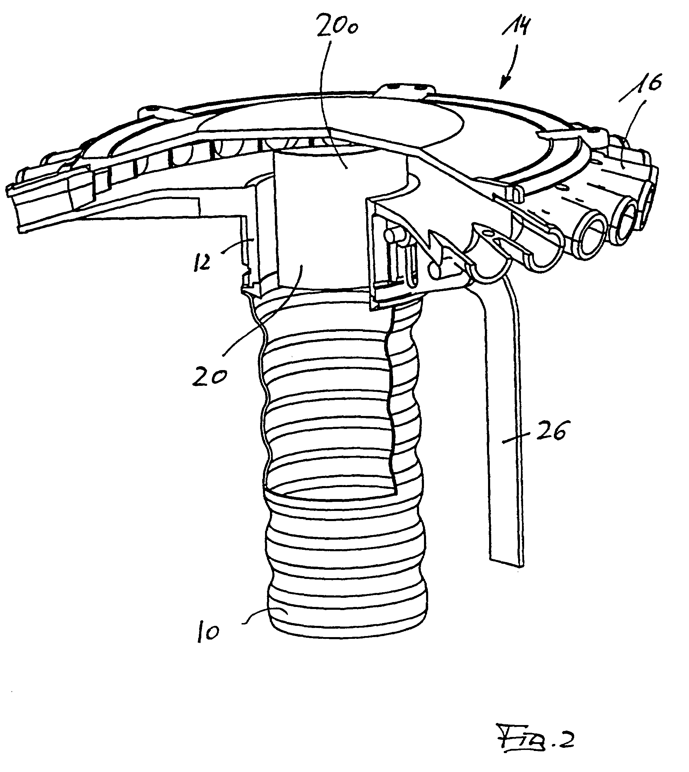

Auf diese Weise strömt das, beispielsweise pneumatisch zugeführte Saatgut, zunächst in Verlängerung der Zuführleitung in den Verteilerkopf, von wo es radial in einen Ringraum zwischen Zuführleitung und Verteilerleitungen gelangt, die sich meist radial (sternförmig) an die Umfangsfläche des Verteilerkopfes anschließen (oder auch vom Außenbereich des Verteilerkopfes nach unten erstrecken), wie dies beispielsweise die Figuren 1 und 2 der DE 44 11 240 C1 oder Figur 1 der EP 0 309 608 A2 zeigen.

Häufig besteht die Notwendigkeit, eine oder mehrere dieser Verteilerleitungen, entlang der das Saatgut weiter transportiert und schließlich ausgebracht wird, abzusperren, um zum Beispiel beim Säen eine Fahrgasse anzulegen oder Randbereiche eines Feldes nicht zu säen oder zu düngen.

Diese Absperrung der Verteilerleitungen erfolgt im Stand der Technik auf unterschiedlichste Weise. Häufig, wie bei der EP 0 309 608 A2, sind Absperrmittel in den Verteilerleitungen angeordnet. Gemäß EP 0 328 858 B1 und DE 44 11 240 C1 befinden sich Absperrmittel im Verteilerraum des Verteilerkopfes. Beim Lösungsvorschlag der US 4,989,784 A schließen die Verteilerleitungen nicht radial an den Verteilerraum an (also nicht im Wesentlichen rechtwinklig zur Strömungsrichtung des in der Zuführleitung transportierten Saatgutes), sondern parallel zur Zuführrichtung des Saatgutes in entgegengesetzter Richtung. Entsprechend werden die Absperrmittel dort von rohrförmigen Elementen gebildet, die gleichzeitig der Reinigung der Verteilerleitungen dienen.

In allen Fällen wird jeder Verteilerleitung ein eigenes Absperrorgan zugeordnet.

Es wäre wünschenswert, mit einem einzigen Element mehrere Verteilerleitungen gleichzeitig absperren zu können, um Fahrgassen anzulegen oder eine Halb-, Seiten- oder Teilbreitenabschaltung zu realisieren.

In der SU 14 57 836 A1 wird ein Verteiler vorgeschlagen, bei dem Verteilerleitungen mit Klappen verschlossen werden. Im Bereich der Klappen kann sich das Saatgut unkontrolliert ansammeln und sowohl die Abdichtung der Klappen in der Schließposition als auch die Lage der Klappen in der geöffneten Position behindern.

Der erfindungsgemäße Lösungsvorschlag unterliegt folgendem Prinzip: Der Verteiler wird mit mindestens einem Absperrschieber (nachstehend Schieber genannt) ausgebildet, der in den Verteilerraum und aus diesem heraus bewegbar ist. Der Schieber kann insbesondere entgegen oder in Zuführrichtung des Saatgutes in den Verteilerkopf, also in der Regel in Axialrichtung der Zuführleitung bewegbar (verschiebbar) angeordnet oder gelagert (geführt) werden.

Je nach Anordnung, Form und Größe sowie der individuell einstellbaren Verschiebeposition wird das Absperrmittel bei der erfindungsgemäßen Konstruktion mit Abstand vor den Verteilerleitungen (das heißt deren Anschlüssen zum Verteilerraum) angeordnet.

Die Schieber befinden sich also in dem Teil des Verteilers (Verteilerraums), in dem das zu verteilende Gut (noch) eine freie Beweglichkeit hat, das ist der Raum in Verlängerung des Zuführorgans und der Ringraum bis zu den (beliebig angeordneten) Eintrittsöffnungen in die Verteilerleitungen. Hat beispielsweise das Saatkorn nämlich den Verteilerraum verlassen und den Anschlußbereich (die Öffnung) einer Verteilerleitung erreicht, so wird es von nun an entlang der Verteilerleitung zwangsgeführt. Der Begriff Verteilerleitung umfaßt dabei nicht nur die in der Regel flexible Leitung, sondern auch das in der Regel starre Anschlußstück (Stutzen, Adapter) im Umfangsbereich des Verteilerkopfes.

Der in den Verteilerraum überführte Schieber wirkt entsprechend wie ein Schirm oder eine Blende und deckt eine oder mehrere mit Abstand dahinter beginnende Verteilerleitungen ab.

Der Schieber verursacht also quasi einen "strömungstechnischen Schatten" für das radial zu den Verteilerleitungen strömende Gut. Mehrere Schieber lassen unterschiedliche Absperrstellungen zu. Eine genaue Funktionsbeschreibung und Einzelheiten ergeben sich aus der nachfolgenden Figurenbeschreibung.

In ihrer allgemeinsten Ausführungsform betrifft die Erfindung danach einen Verteiler für eine Verteilmaschine für Saatgut, Dünger und dergleichen, mit folgenden Merkmalen:
- einem, einen Verteilerraum definierenden Verteilerkopf,
- in den Verteilerkopf mündet mindestens eine Zuführleitung,
- an den Verteilerkopf schließen, mit Abstand zu der Zuführleitung, Verteilerleitungen an,
- mindestens einem Absperrschieber,
- der Absperrschieber ist mit Abstand zu den Verteilerleitungen in den Verteilerraum und aus diesem heraus bewegbar.

Der Absperrschieber ist beispielsweise mit einem Abschnitt in Axialrichtung der Zuführleitung bewegbar angeordnet.

Der Verteilerraum beziehungsweise der Verteilerkopf können in etwa die Form eines niedrigen (kurzen) Zylinders aufweisen, in den auf einer Hauptfläche die Zuführleitung, in der Regel mittig, einmündet. Auf diese Weise ergibt sich eine strömungstechnische Optimierung im Sinne einer gleichmäßigen radialen Verteilung des körnigen Gutes auf die beispielsweise umfangsseitig anschließenden Verteilerleitungen. Ebenso kann der Verteilerraum auch kuppelartig gestaltet sein oder andere Formen aufweisen.

Die Verteilerleitungen verlaufen nach einer Ausführungsform sternförmig in radialer Richtung und/oder rotationssymmetrisch in Bezug auf eine Mittenlängsachse des Verteilerkopfes, gegebenenfalls auch weitgehend parallel zur Zuführleitung.

Der Schieber kann auf unterschiedliche Weise angeordnet und ausgebildet sein. Nach einer Ausführungsform wird der Schieber vom Anschlußende oder Übergangsbereich der Zuführleitung gebildet. Mit anderen Worten: die Zuführleitung selbst bildet zumindest mittelbar den Schieber und ist an ihrem Anschlußende zum Verteilerkopf entsprechend gestaltet. Beispielsweise kann das freie Ende der mit Kreisquerschnitt gestalteten Zuführleitung "zinnenartig" oder "mäanderartig" ausgebildet sein, wie dies ansatzweise in der nachfolgenden Figurenbeschreibung dargestellt ist. Auf diese Weise werden, sobald der entsprechende Abschnitt der Zuführleitung in den Verteilerraum verschoben wurde, ein oder mehrere "Blenden" errichtet, die den radialen Weitertransport des Saatgutes abschotten und damit eine Zuführung des Saatgutes in die "im Schattenbereich der Blende" liegenden Verteilerleitungen verhindert.

Die Zuführleitung kann zu diesem Zweck teleskopartig entlang eines korrespondierenden Rohrstutzens verschoben werden, der sich von der Unterseite des Verteilerkopfes aus koaxial zur Zuführleitung erstreckt.

Ebenso kann umgekehrt der Schieber in der Zuführleitung und parallel zu dieser (in Axialrichtung) verschiebbar angeordnet werden, wie dies ebenfalls in der nachfolgenden Figurenbeschreibung skizziert wird.

Der Schieber kann auch an anderen Stellen des Verteilerkopfes vorgesehen werden. Er wird jedoch stets mit Abstand vor den Verteilerleitungen angeordnet. Eine Möglichkeit ist gegenüber der Zuführleitung im Deckelbereich des Verteilerkopfes.

Soweit von einem Schieber die Rede ist, kann dieser Schieber durch eine quasi beliebige Geometrie in unterschiedliche Teilblenden untergliedert werden, die verschiedene Teilabschnitte des ringförmigen Verteilerraums abdecken. Ebenso können aber auch mehrere individuelle (diskrete) Schieber getrennt oder gemeinsam verschiebbar (bewegbar) vorgesehen werden.

Der vorgenannten Geometrie des Verteilerkopfes beziehungsweise Verteilerraumes angepaßt, sieht eine Ausführungsform der Erfindung vor, dem Schieber die Form eines Zylinders oder Zylinderabschnittes zu geben. In diesem Fall ergibt sich auch eine vorteilhafte Führung der dann parallel zueinander verlaufenden Wandabschnitte beispielsweise von Schieber und Zuführrohr.

Der Schieber kann sich über einen Teil oder die gesamte Höhe des Verteilerraumes in den Verteilerraum erstrecken. Üblicherweise wird der Schieber jedoch so weit verfahren, dass er mindestens 70 %, in der Regel mindestens 85 % der Höhe des Verteilerraumes an der entsprechenden Stelle abdeckt.

Wie ausgeführt, wird der Schieber mit Abstand vor den Zutrittsöffnungen der Verteilerleitungen angeordnet und der maximale Abstand entspricht im Normalfall dem Abstand zwischen der Umfangswand des Zuführrohres und der Umfangswand des Verteilerkopfes (mit den Anschlußöffnungen für die Verteilerleitungen).

Der oder die Schieber können entlang dieses Weges an faktisch beliebiger Stelle angeordnet werden. Es ist offensichtlich, dass mit zunehmendem Abstand zwischen Schieber und Umfangswand des Verteilerkopfes der genannte "Schattenbereich" größer wird und entsprechend mit ein und demselben Schieber bei zunehmendem Abstand von der Umfangswand des Verteilerkopfes mehr Verteilerleitungen gleichzeitig abgesperrt werden können.

Eine entsprechende individuelle Anpassung läßt sich umgekehrt durch eine Veränderung der Größe des Schiebers erreichen. Beispielsweise kann der in den Verteilerraum eindringende Teil des Schiebers die Form eines Viertel-, Halb- oder Dreiviertelzylinders haben. Im letztgenannten Fall kann das zu verteilende Gut also nur noch durch eine "90°-Öffnung" radial in den Verteilerraum und die radial anschließenden Verteilerleitungen gelangen.

In der zurückgezogenen Position, bei der also keine Verteilerleitungen abgesperrt werden sollen, ist der Schieber vorzugsweise so angeordnet, dass er die freie Strömung des Saatgutes nicht behindert.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert. In den Figuren sind gleiche oder gleichwirkende Bauteile mit gleichen Bezugsziffern dargestellt. Die Figuren zeigen, jeweils in schematisierter Darstellung, perspektivische Teilansichten von Verteilerköpfen mit angeschlossener Zuführleitung.

Anhand des Ausführungsbeispieles nach den Figuren 1, 2 wird der prinzipielle Aufbau noch einmal erläutert.

Eine Zuführleitung 10 besteht aus einem Rohr und einem anschließenden zylinderförmigen Abschnitt 12, der bereits Bestandteil eines Verteilerkopfes 14 ist. Der Verteilerkopf 14 besitzt im Wesentlichen die Form eines niedrigen Zylinders mit einem Boden 14b, einer im Abstand darüber verlaufenden Decke 14d und einer zylindrischen Umfangswand 14u, von der eine Vielzahl von Verteilerleitungen 16 verlaufen, und zwar im Wesentlichen zunächst senkrecht zur Mittenlängsachse M der Einrichtung.

In der Praxis werden die in der Figur dargestellten Anschlußbereiche der Verteilerleitungen auch als Anschlußstutzen bezeichnet, die Bestandteil des Verteilerkopfes 14 sein können und an die flexible Verteilerleitungen anschließen. Im Rahmen dieser Offenbarung werden die dargestellten Stutzen jedoch bereits als Bestandteile der Verteilerleitungen betrachtet.

Korrespondierende Öffnungen 16o in der Umfangswand 14u des Verteilerkopfes 14 bilden die Schnittstelle zwischen einem Verteilerraum 18 innerhalb des Verteilerkopfes 14 und den Verteilerleitungen 16.

Das körnige Gut, beispielsweise Saatgut, welches in der Regel pneumatisch entlang der Leitung 10 antransportiert wird, wird anschließend radial in den Verteilerraum 18 abtransportiert, wo es sich "frei bewegen" kann, bevor es in den Bereich der Öffnungen 16o gelangt und anschließend in den Verteilerleitungen 16 zwangsgeführt wird.

Im Abschnitt 12, der konstruktiv zwar Bestandteil des Verteilerkopfes 14 ist, funktional jedoch den Endabschnitt der Zuführleitung 10 bildet, ist ein Schieber 20 in Form eines Halbzylinders angeordnet, dessen Umfangsfläche parallel zur Innenwand des Abschnittes 12 verläuft. Von der Außenwand des Schiebers 20 verläuft ein Arm 22 durch eine korrespondierende schlitzartige, in Axialrichtung (M - M) verlaufende Öffnung 24 im Abschnitt 12. Im Bereich unter den Verteilerleitungen 16 ist ein Schwenkhebel 26 über ein (nicht dargestelltes) Kippgelenk befestigt, wobei ein zweiter Hebelarm 28 des Schwenkhebels 26 nach Art eines Drehgelenks mit dem Arm 22 des Schiebers 20 verbunden ist. Durch Druck auf den Schwenkhebel 26 (siehe Figur 2) wird entsprechend der Schieber 20 von der abgesenkten Position gemäß Figur 1 in seine Absperrposition gemäß Figur 2 überführt.

Ein oberer Teil 20o des Schiebers 20 ragt nunmehr in den Innenraum 18 des Verteilerkopfes 14 und bildet eine Absperrfläche zum benachbarten ringförmigen Teil des Verteilerraums 18, so dass zugeführtes Saatgut nicht mehr in die im Schatten dahinterliegenden Verteilerleitungen 16 strömen kann.

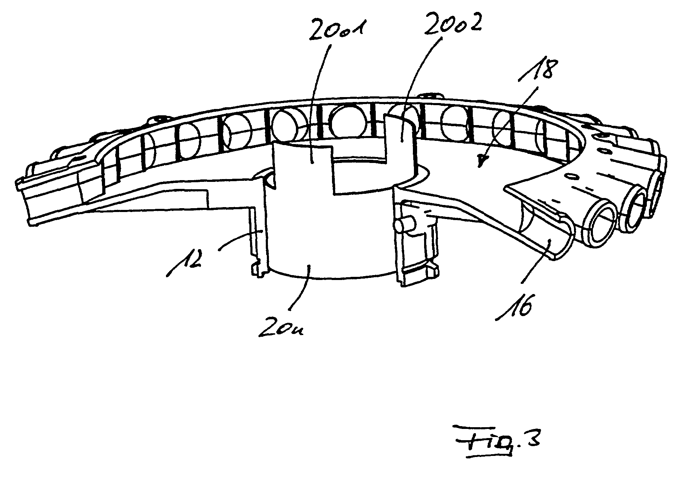

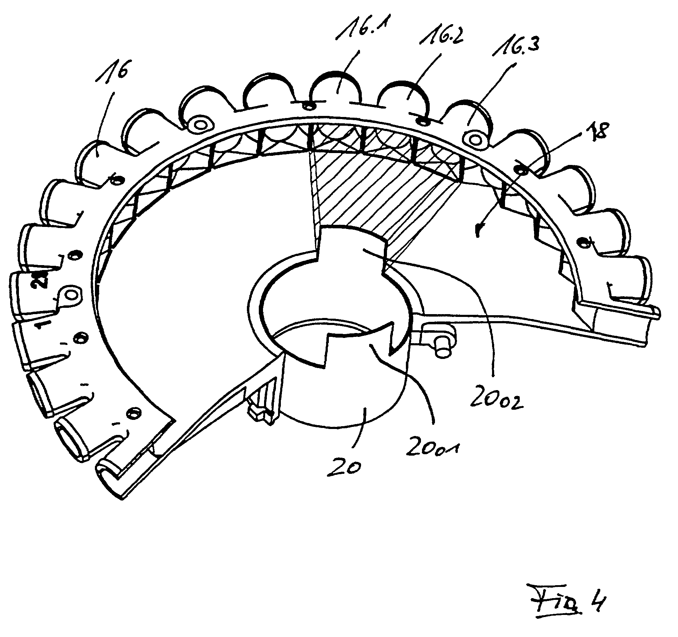

Das Ausführungsbeispiel nach den Figuren 3, 4 unterscheidet sich vom Ausführungsbeispiel nach den Figuren 1, 2 dadurch, dass der Schieber in seinem unteren Teil 20u zylinderförmig ist und sein oberer Teil aus zwei gegenüberliegenden Wandabschnitten 20o1, 20o2 besteht, die jeweils einen ca. 20° breiten Zylinderwandabschnitt darstellen.

Wie Figur 4 zeigt, ergibt sich bei der dargestellten Geometrie daraus ein "Schattenbereich" hinter dem Abschnitt 20o2, der drei Verteilerleitungen 16.1, 16.2 und 16.3 abschirmt. Entsprechend würde auch der zweite Schieberabschnitt 20o1 drei weitere (nicht dargestellte) Verteilerleitungen abschirmen.

Durch Verkleinerung oder Vergrößerung der umfangsseitigen Breite und/oder durch Vergrößerung oder Verkleinerung des radialen Abstandes zwischen Schieber und Eingangsbereich 16o der Verteilerleitungen 16 kann eine faktisch beliebige Anzahl von Verteilerleitungen "in den Schattenbereich der Schieber gelegt werden", um diese Verteilerleitungen funktionslos zu machen.

Auf diese Weise lassen sich einzelne oder Gruppen von Verteilerleitungen in beliebiger Weise zusammenfassen und so Fahrgassen anlegen oder eine Halb-, Seiten-, oder Teilbreitenabschaltung für das Saatgut realisieren.

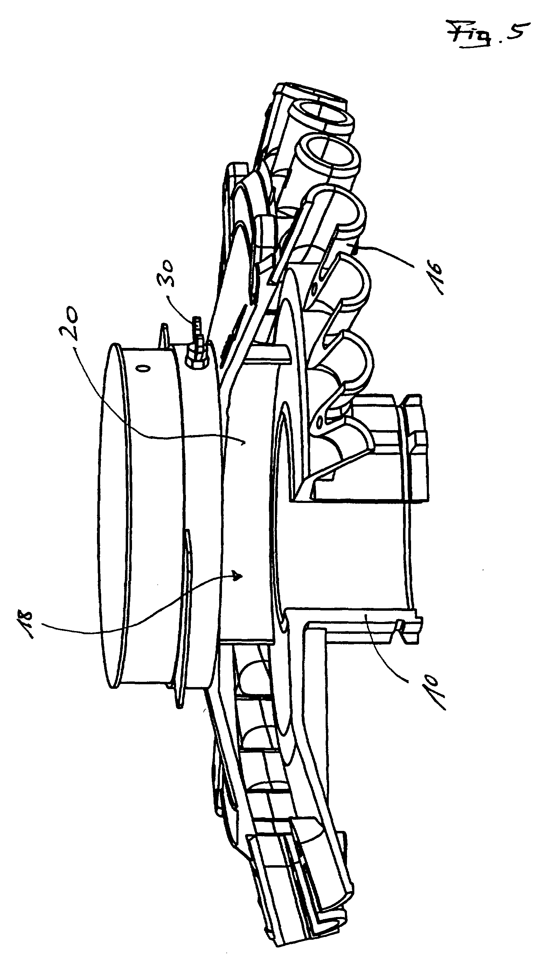

Beim Ausführungsbeispiel nach Figur 5 ist der Absperrschieber 20 "oben", also in der Funktionsposition gegenüber der von "unten" in den Verteilerkopf 14 mündenden Zuführleitung 10 angeordnet, und zwar "axial beweglich". Nach Lösen entsprechender Feststellschrauben 30 kann der Schieber nach unten bis zu einer gewünschten "Tiefe" in den Verteilerraum 18 verschoben und dann wieder fixiert werden. Im Prinzip ist die Anordnung und Bewegung des Schiebers bei Figur 5 nur spiegelbildlich zum Beispiel gemäß Figur 1.

## Patentansprüche

1. Verteiler für eine Verteilmaschine für Saatgut, Dünger und dergleichen, der folgende Merkmale umfasst:
- einen, einen Verteilerraum (18) definierenden Verteilerkopf (14),
- in den Verteilerkopf (14) mündet mindestens eine Zuführleitung (10),
- an den Verteilerkopf (14) schließen, mit Abstand zu der Zuführleitung (10), Verteilerleitungen (16) an,
- mindestens einen Absperrschieber (20), **dadurch gekennzeichnet, dass**
- der Absperrschieber (20) mit Abstand zu den Verteilerleitungen (16) in den Verteilerraum (18) und aus diesem heraus bewegbar ist.

2. Verteiler nach Anspruch 1, bei dem der Verteilerraum (18) beziehungsweise der Verteilerkopf (14) in etwa die Form eines niedrigen Zylinders aufweisen, in den auf einer Seite (14b) die Zuführleitung (10) einmündet.

3. Verteiler nach Anspruch 1, bei dem die Verteilerleitungen (16) sternförmig in radialer Richtung verlaufen.

4. Verteiler nach Anspruch 1, bei dem der Absperrschieber (20) von einem Anschlußende oder Übergangsbereich der Zuführleitung in den Verteilerkopf (14) gebildet wird.

5. Verteiler nach Anspruch 1, bei dem der Absperrschieber (20) von einem entlang der Zuführleitung (10) bewegbaren Körper gebildet wird.

6. Verteiler nach Anspruch 1, bei dem der Absperrschieber (20) an einem Abschnitt des Verteilerkopfes (14) geführt ist, der der Zuführleitung (10) gegenüberliegt.

7. Verteiler nach Anspruch 1, bei dem der Absperrschieber (20) an einem Deckelbereich (14d) des Verteilerkopfes (14) angeordnet ist.

8. Verteiler nach Anspruch 1, bei dem der Absperrschieber (20) die Form eines Zylinders oder Zylinderabschnitts aufweist.

9. Verteiler nach Anspruch 1, bei dem sich der Absperrschieber (20), in seiner Absperrposition, über mindestens 70 % der Höhe des Verteilerraumes (18) an dieser Stelle erstreckt.

10. Verteiler nach Anspruch 1, bei dem sich der Absperrschieber (20), in seiner Absperrposition, über mindestens 85 % der Höhe des Verteilerraumes (18) an dieser Stelle erstreckt.

11. Verteiler nach Anspruch 1, bei dem sich der Absperrschieber (20), in seiner Absperrposition, über die gesamte Höhe des Verteilerraumes (18) an dieser Stelle erstreckt.

12. Verteiler nach Anspruch 1, bei dem der Absperrschieber (20) mechanisch verstellbar angeordnet ist.

13. Verteiler nach Anspruch 1, bei dem der Absperrschieber (20) elektrisch verstellbar angeordnet ist.

14. Verteiler nach Anspruch 1, bei dem der Absperrschieber (20) pneumatisch verstellbar angeordnet ist.

15. Verteiler nach Anspruch 1, bei dem der Absperrschieber (20) hydraulisch verstellbar angeordnet ist.

16. Verteiler nach Anspruch 1, bei dem der Absperrschieber (20) mit einem Abschnitt (20o) in Axialrichtung der Zuführleitung (10) bewegbar ist.

17. Verteiler nach Anspruch 1, bei dem mehrere Absperrschieber (20) unabhängig voneinander in dem Verteilerraum (18) und aus diesem heraus bewegbar sind.

## Claims

1. Spreader for a spreading machine for seeds, fertilizer and the like, comprising the following features:
- a spreader head (14), which defines a spreader space (18),
- at least one feed line (10) leads into the spreader head (14),
- spreader lines (16) adjoin the spreader head (14) at a spacing from the feed line (10),
- at least one shut-off slide (20), **characterised in that** the shut-off slide (20) can move into and out of the spreader space (18) at a spacing from the spreader lines (16).

2. Spreader according to Claim 1, in which the spreader space (18) and the spreader head (14) are approximately in the form of a shallow cylinder, into which the feed line (10) leads on one side (14b).

3. Spreader according to Claim 1, in which the spreader lines (16) extend in stellate fashion in the radial direction.

4. Spreader according to Claim 1, in which the shut-off slide (20) is formed by a connection end or transition region of the feed line into the spreader head (14).

5. Spreader according to Claim 1, in which the shut-off slide (20) is formed by a body which can move along the feed line (10).

6. Spreader according to Claim 1, in which the shut-off slide (20) is guided at a portion of the spreader head (14) which lies opposite the feed line (10).

7. Spreader according to Claim 1, in which the shut-off slide (20) is disposed at a cover region (14d) of the spreader head (14).

8. Spreader according to Claim 1, in which the shut-off slide (20) is in the form of a cylinder or cylinder portion.

9. Spreader according to Claim 1, in which, when in its shut-off position, the shut-off slide (20) extends over at least 70 % of the height of the spreader space (18) at this point.

10. Spreader according to Claim 1, in which, when in its shut-off position, the shut-off slide (20) extends over at least 85 % of the height of the spreader space (18) at this point.

11. Spreader according to Claim 1, in which, when in its shut-off position, the shut-off slide (20) extends over the entire height of the spreader space (18) at this point.

12. Spreader according to Claim 1, in which the shut-off slide (20) is disposed so as to be mechanically displaceable.

13. Spreader according to Claim 1, in which the shut-off slide (20) is disposed so as to be electrically displaceable.

14. Spreader according to Claim 1, in which the shut-off slide (20) is disposed so as to be pneumatically displaceable.

15. Spreader according to Claim 1, in which the shut-off slide (20) is disposed so as to be hydraulically displaceable.

16. Spreader according to Claim 1, in which the shut-off slide (20) can be moved with a portion (20o) in the axial direction of the feed line (10).

17. Spreader according to Claim 1, in which a plurality of shut-off slides (20) can be moved independently of one another into and out of the spreader space (18).

## Revendications

1. Distributeur pour un épandeur de semences, d'engrais et d'autres produits de ce genre, qui comprend les caractéristiques suivantes :
une tête de distribution (14) définissant un compartiment de distribution (18),
au moins un conduit d'alimentation (10) débouche dans la tête de distribution (14),
des conduits de distribution (16) sont raccordés à la tête de distribution (14), à distance du conduit d'alimentation (10),
au moins une vanne de réglage (20), **caractérisé en ce que** la vanne de réglage (20) est déplaçable dans le compartiment de distribution (18) et hors celui-ci, à distance des conduits de distribution (16).

2. Distributeur selon la revendication 1, dans lequel le compartiment de distribution (18) ou la tête de distribution (14) présente à peu près la forme d' un cylindre réduit dans lequel le conduit d'alimentation (10) débouche sur un côté (14b).

3. Distributeur selon la revendication 1, dans lequel les conduits de distribution (16) s'étendent en forme d'étoile dans la direction radiale.

4. Distributeur selon la revendication 1, dans lequel la vanne de réglage (20) est formée par une extrémité de raccordement ou zone de transition du conduit d'alimentation dans la tête de distribution (14).

5. Distributeur selon la revendication 1, dans lequel la vanne de réglage (20) est formée par un corps mobile le long du conduit d'alimentation (10).

6. Distributeur selon la revendication 1, dans lequel la vanne de réglage (20) est guidée au niveau d'un tronçon de la tête de distribution (14) qui se trouve à l'opposé du conduit d'alimentation (10).

7. Distributeur selon la revendication 1, dans lequel la vanne de réglage (20) est placée dans une zone de couvercle (14d) de la tête de distribution (14).

8. Distributeur selon la revendication 1, dans lequel la vanne de réglage (20) présente la forme d'un cylindre ou d'un tronçon de cylindre.

9. Distributeur selon la revendication 1, dans lequel la vanne de réglage (20), dans sa position de réglage, s'étend sur au moins 70% de la hauteur du compartiment de distribution (18) à cet endroit.

10. Distributeur selon la revendication 1, dans lequel la vanne de réglage (20), dans sa position de réglage, s'étend sur au moins 85% de la hauteur du compartiment de distribution (18) à cet endroit.

11. Distributeur selon la revendication 1, dans lequel la vanne de réglage (20), dans sa position de réglage, s'étend sur toute la hauteur du compartiment de distribution (18) à cet endroit.

12. Distributeur selon la revendication 1, dans lequel la vanne de réglage (20) est agencée de manière réglable mécaniquement.

13. Distributeur selon la revendication 1, dans lequel la vanne de réglage (20) est agencée de manière réglable électriquement.

14. Distributeur selon la revendication 1, dans lequel la vanne de réglage (20) est agencée de manière réglable pneumatiquement.

15. Distributeur selon la revendication 1, dans lequel la vanne de réglage (20) est agencée de manière réglable hydrauliquement.

16. Distributeur selon la revendication 1, dans lequel la vanne de réglage (20) est déplaçable avec une section (20o) dans la direction axiale du conduit d'alimentation (10).

17. Distributeur selon la revendication 1, dans lequel plusieurs vannes de réglage (20) sont déplaçables indépendamment les unes des autres dans le et hors du compartiment de distribution (18).
